# EUROPEAN PATENT APPLICATION

(11) **EP 4 056 244 A1**
(43) Date of publication of application: **14.09.2022**
(21) Application number: 20887650.8
(22) Date of filing: 30.10.2020
(51) Int. Cl.: A63F 13/35, A63F 13/428, A63F 13/52, A63F 13/53, A63F 13/55, A63F 13/847, A63F 13/86, G06F 3/01

(54) **INFORMATION PROCESSING DEVICE, INFORMATION PROCESSING METHOD, AND PROGRAM**

(30) Priority: 11.11.2019 JP 2019204288
(71) Applicant: Meleap Inc., Tokyo 100-0011 (JP)
(72) Inventor: FUKUDA, Hiroshi, Tokyo 100-0011 (JP)
(74) Representative: Ström & Gulliksson AB
(86) International application number: PCT/JP2020/040908
(87) International publication number: WO 2021/095576

(57) **Abstract**

The present invention is configured so that a player and a third party other than the player can enjoy a game. A server 4 comprises a game execution unit 51, a behavior information acquisition unit 53, and a reflection unit 54. The game execution unit 51 executes a game in which an object is caused to act in accordance with the movements of a player P. The behavior information acquisition unit 53 acquires behavior information pertaining to the behavior of a third party related to the game other than the player P. The reflection unit 54 generates changes that affect the game, including the object, on the basis of the behavior information.

## Description

### TECHNICAL FIELD

The present invention relates to an information processing device, an information processing method, and a program.

### BACKGROUND ART

There is known an augmented reality type game in which players grouped into two teams play against each other in a limited area such as a court or a field, for example. In recent years, there has also been constructed a mechanism in which not only players competing in a game, but also third parties other than the players, for example, viewers who watch the game, support desired players (supported players) (for example, Patent Document 1).

Patent Document 1: Japanese Unexamined Patent Application, Publication No. 2018-015354

### DISCLOSURE OF THE INVENTION

### Problems to be Solved by the Invention

However, conventional games have been designed to the extent that a viewer's cheer for a player allows a cheering message or stamp to be sent to the player and gives the player points corresponding to the amount of the message or stamp (degree of cheering), but has not reached a level where a third party such as a viewer can feel as if he/she participates in the game together with the player. Further, in a game where objects are displayed while superimposed on real players in this way, it is important from the viewpoint of viewing or playing a game how accurately movements of players' heads and hands can be tracked. Further, in a game where a player throws or shoots an object such as a fireball or a ball, the timing at which the object is released from the player's hand according to a player's throwing motion is important from the viewpoint of viewing or playing the game. However, under the circumstances, the conventional games have been insufficient in tracking accuracy and sensation of release from hands, and viewers have not enjoyed the games in some cases because they feel neither a sense of unity nor a sense of reality for players and objects, and thus the games are unattractive to the viewers.

The present invention has been made in view of such a situation, and has an object to enable players and third parties other than the players to enjoy games.

### Means for Solving the Problems

In order to attain the above object, an information processing device according to one aspect of the present invention comprises:
a game execution unit for executing a game in which an object is operated according to a movement of a player;
an information acquisition unit for acquiring behavior information on a behavior of a third party who is related to the game except for the player; and
a reflection unit for generating a change that affects the game including the object, based on the behavior information of the third party acquired by the information acquisition unit. An information processing method and a program corresponding to the information processing device of the one aspect of the present invention are also provided as an information processing method and a program of one aspect of the present invention.

### Effects of the Invention

According to the present invention, players and other third parties can enjoy the game.

### BRIEF DESCRIPTION OF THE DRAWINGS

FIG. 1 is a diagram showing an outline of an AR game according to a first embodiment of the present invention;
FIG. 2 is a diagram showing a configuration of an information processing system for providing the AR game of FIG. 1 and a service;
FIG. 3 is a diagram showing a hardware configuration of a server in the information processing system of FIG. 2;
FIG. 4 is a diagram showing a functional configuration of the server of FIG. 3;
FIG. 5 is a diagram showing a table in which conditions for assessing a cheering behavior among acquired behavior information are stored;
FIG. 6 is a diagram showing a table in which conditions for assessing a cheering behavior among the acquired behavior information are stored;
FIG. 7 is a flowchart showing an operation of the server of FIGS. 1 to 3;
FIG. 8 is a diagram showing a configuration of an information processing system according to a second embodiment;
FIG. 9 is a diagram showing a functional configuration of each equipment of the information processing system of FIG. 8;
FIG. 10 is a diagram showing an operation of tracking the position of a hand in the second embodiment;
FIG. 11 is a diagram showing an operation of tracking the position of a head portion by marker tracking in the second embodiment;
FIG. 12 is a diagram showing an operation of tracking the position of the head portion by world tracking in the second embodiment;
FIG. 13 is a diagram showing an operation of synchronizing two pieces of tracking information in the second embodiment;
FIG. 14 is a diagram showing information output as a synchronization result in the second embodiment;
FIG. 15 is a diagram showing another example in which a tracking technique is applied;
FIG. 16 is a diagram showing a configuration of an information processing system according to a third embodiment;
FIG. 17 is a diagram showing an operation for determining a shooting timing;
FIG. 18 is a diagram showing an operation of maintaining a player's line of sight;
FIG. 19 is a diagram showing an operation of determining a shooting direction;
FIG. 20 is a diagram showing a space as viewed from the backside of a player;
FIG. 21 is a diagram showing an example of limiting a shoot shot by a player to a certain height;
FIG. 22 is a diagram showing an example in which a shoot is controlled or charged by using rotation information of an arm sensor, and an example in which a shoot is allowed to be released when an arm is shaken after charging;
FIG. 23 is a diagram showing an aspect in which a shoot shot by a player of an opposing team is caught; and
FIG. 24 is a diagram showing an aspect in which the shooting of a shoot is restricted within a predetermined range.

### PREFERRED MODE FOR CARRYING OUT THE INVENTION

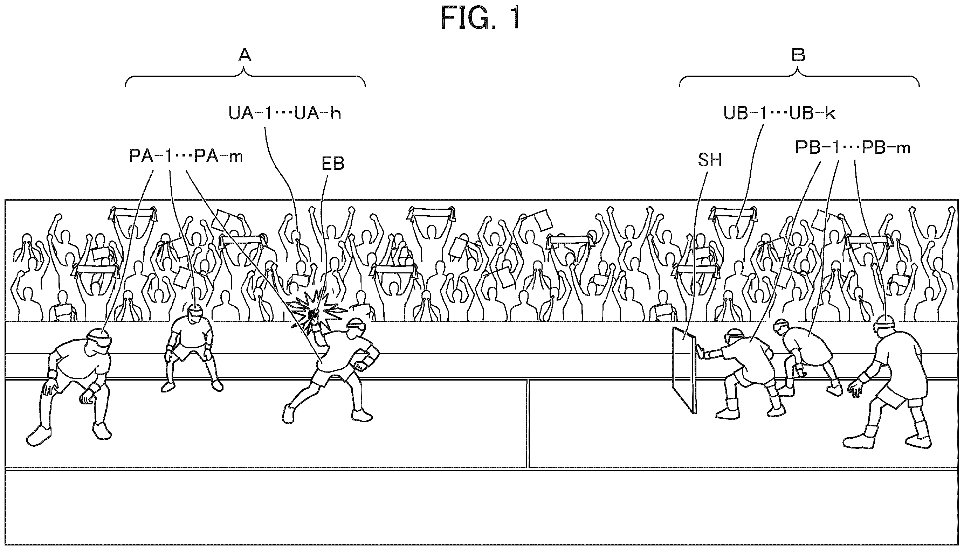

Embodiments of the present invention will be described below with reference to the drawings. FIG. 1 is a diagram showing an information processing system according to a first embodiment of the present invention.

### (First Embodiment)

As shown in FIG. 1, an information processing system of a first embodiment provides an augmented reality type sports event (hereinafter referred to as "AR Game: Augmented Reality Game") in which one or more players PA-1 to PA-m and players PB-1 to PB-m are grouped into two teams of a first team A and a second team B, and the players freely move about in a field while activating their techniques by moving their bodies, and cooperate with allies to damage their opponents, and compete for the number of survivors to enjoy the game. Further, this information processing system provides a supporter support service by which supporters UA-1 to UA-h and supporters UB-1 to UB-k who are one or more viewers can feel as if they participate in an AR game. The players PA-1 to PA-m are players of the first team A. The players PB-1 to PB-m are players of the second team B. The supporters UA-1 to UA-h and the supporters UB-1 to UB-k are viewers who watch the game, and can be said to be supporters who support their favorite teams and players, but they are obstructers for supporters of the opposing team. Therefore, the supporters including these obstructers can be said to be third parties who are related to the game in addition to the players P.

When it is not necessary to identify individual terminals, a player terminal 1 (a head mounted display 1-1 (hereinafter referred to as "HMD 1-1") and an arm sensor 2), and a supporter terminal 3 will be hereinafter referred to. When it is not necessary to identify individual players, a player P, a player PA, a player PB, etc. will be referred to. Further, when it is not necessary to identify individual supporters, a supporter U, a supporter UA, a supporter UB, etc. will be referred to.

The supporters UA-1 to UA-h cheer in a cheering area for cheering the players PA-1 to PA-m and the team thereof. The supporters UB-1 to UB-h cheer in a cheering area for cheering the players PB-1 to PB-m and the team thereof.

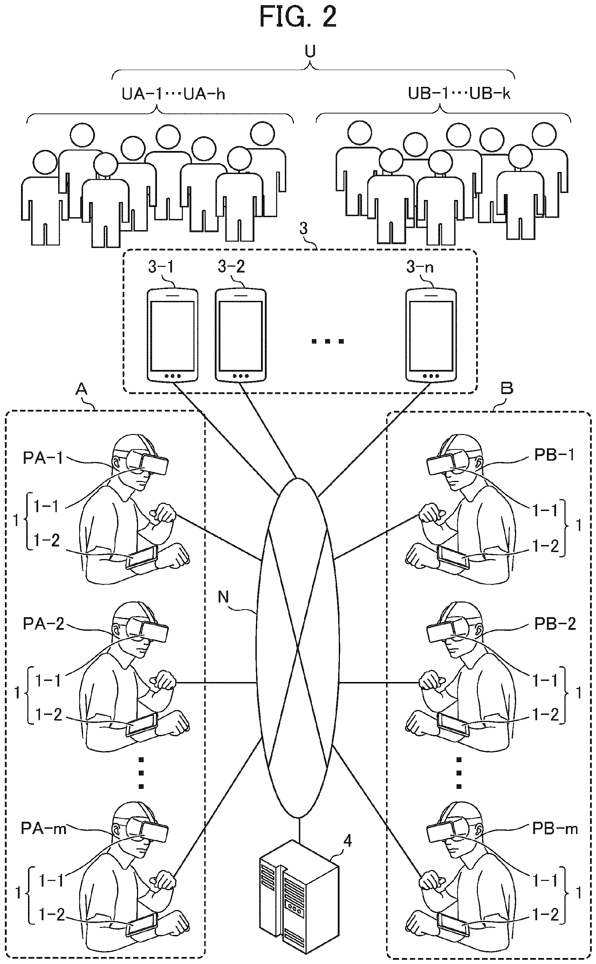

As shown in FIG. 2, the information processing system of FIG. 1 is configured by mutually connecting, through a network N, player terminals 1 (HMDs 1-1, arm sensors 1-2) which the players PA-1 to PA-m and the players PB-1 to PB-m wear, supporter terminals 3-1 to 3-n to be operated by one or more supporters UA-1 to UA-h and UB-1 to UB-k, and a server 4 for affecting an AR game based on cheering behaviors detected and transmitted by each of the supporter terminals 3-1 to 3-n while operating the AR game.

In the following description, the supporter terminals 3-1 to 3-n are referred to as supporter terminals 3 when it is not necessary to identify the individual terminals.

The player terminal 1 detects the movement of the player P wearing it. The HMD 1-1 is provided with a sensor for detecting the movement of the player P, a communication function, a speaker, a display, a camera, and the like. In other words, the HMD 1-1 detects the line of sight of the player P, the movement of the line of sight, and the movement of the head portion of the player P.

A speaker outputs sounds of the game, voices of surrounding cheers, and the like received by a communication function and so that the player P can hear them. 3DCG hologram images of the game (3D objects such as an energy ball EB and a shield SH) received by the communication function are displayed on a display with being superimposed on an real space which is actually seen through the display. 3DCG is an abbreviation for three-dimensional computer graphics.

The arm sensor 1-2 detects the movement of the arm of the player P. On the game, for example, when the arm is raised in a vertical direction, the arm sensor 1-2 detects the movement of the arm and notifies it to a server 4, and a shield SH is displayed on the display as standing in front of the player P through the game processing in the server 4. Further, when the arm is swung to throw a ball, an energy ball EB is displayed on the display as being shot in a throwing direction from the hand. Peripheral equipment of the HMD 1-1 includes the arm sensor 1-2, and the arm sensor 1-2 also communicates with the HMD 1-1. In addition to the arm sensor 1-2, the peripheral equipment of the HMD 1-1 also includes, for example, Vive Tracker, Opti Track, and the like, and they may be used.

The supporter terminals 3-1 to 3-n are information terminals that can be operated by supporters U who support the players PA-1 to PA-m and the players PB-1 to PB-m, and detect various behaviors including cheering behaviors of the supporters U. The behaviors to be detected by the supporter terminals 3-1 to 3-n include, for example, voices of the supporters input to the supporter terminals 3-1 to 3-n, button pushing operations and touch operations by the supporters U, movements of images of the supporters U captured by the camera functions of the supporter terminals 3-1 to 3-n, behaviors of moving the supporter terminals 3-1 to 3-n by the supporters U while the supporters U hold the supporter terminals 3-1 to 3-n by hands, operations of detecting vertical movements of the supporter terminals 3-1 to 3-n when the supporters U jump (counting steps by pedometers or the like), operations of detecting positional displacements of the supporter terminals 3-1 to 3-n when the supporters U walk (direction measurement, movement measurement, etc.), etc. "Manpo kei" (trade name of Pedometer in Japan) is a registered trademark.

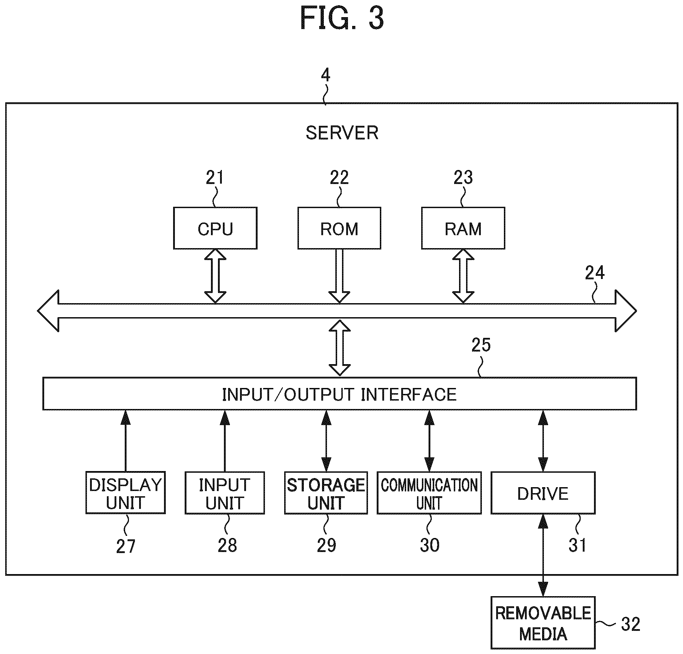

FIG. 3 is a diagram showing a hardware configuration of the server 4 in the information processing system of FIG. 2. As shown in FIG. 3, the server 4 includes CPU (Central Processing Unit) 21, ROM (Read Only Memory) 22, RAM (Random Access Memory) 23, a bus 24, an input/output interface 25, and a display unit 27, an input unit 28, a storage unit 29, a communication unit 30, and a drive 31.

The CPU 21 executes various processing according to programs recorded in the ROM 22 or programs loaded from the storage unit 29 into the RAM 23. Data and the like which are necessary for the CPU 21 to execute various processing are also appropriately stored in the RAM 23.

The CPU 21, the ROM 22, and the RAM 23 are connected to one another via the bus 24. The input/output interface 25 is also connected to the bus 24. The display unit 27, the input unit 28, the storage unit 29, the communication unit 30, and the drive 31 are connected to the input/output interface 25.

The display unit 27 comprises a display such as a liquid crystal display, and displays a screen. The input unit 28 comprises various kinds of hardware buttons or software buttons, or the like, and receives various information input according to a user's instructing operation.

The storage unit 29 comprises DRAM (Dynamic Random Access Memory) or the like, and stores various data. The communication unit 30 is, for example, a LAN interface, and communicates with other devices (the player terminals 1, the supporter terminals 3, and the like in the example of FIG. 2) via a network N including the Internet.

The drive 31 is provided as needed. A removable media 32 comprising a magnetic disk, an optical disk, a magneto-optical disk, a semiconductor memory, or the like is appropriately mounted on the drive 31, and data or a program is read from or written to the removable media 32. A program read out from the removable media 32 by the drive 31 is installed into the storage unit 29 as needed. Further, the removable media 32 can also store various data stored in the storage unit 29 in the same manner as the storage unit 29.

The devices other than the server 4, for example, the hardware of the player terminals 1, the supporter terminals 3, and the like are almost the same as that of the server 4, and the illustration thereof is omitted.

The supporter terminals 3-1 to 3-n are information terminals possessed by the supporters U, for example, smart phones, tablet terminals, and the like. In the case of these terminals, the terminal includes a touch panel in which the display unit 27 and the input unit 28 are integrated with each other to accept an operation by a human finger or the like. The touch panel enables the supporter U to execute a touch operation. It is not necessary for all spectators to have supporter terminals 3-1 to 3-n. In addition, examples of the information terminal include a television device, a personal computer, a console game, and the like.

Further, recent smart phones include various sensors such as an infrared sensor, a gyro sensor, a magnetic sensor (direction sensors), a proximity sensor, a barometric pressure sensor, a temperature sensor, an optical sensor, an acceleration sensor (motion sensor), a heart rate sensor, and a blood pressure sensor, and also include communication functions such as a microphone, a GPS signal reception function, and a wireless LAN. The supporter terminals 3-1 to 3-n themselves can detect human behaviors and send (transmit) them to the outside as behavior information. The server 4 can acquire the behavior information sent from each of the supporter terminals 3-1 to 3-n and perform various processing based on the acquired behavior information.

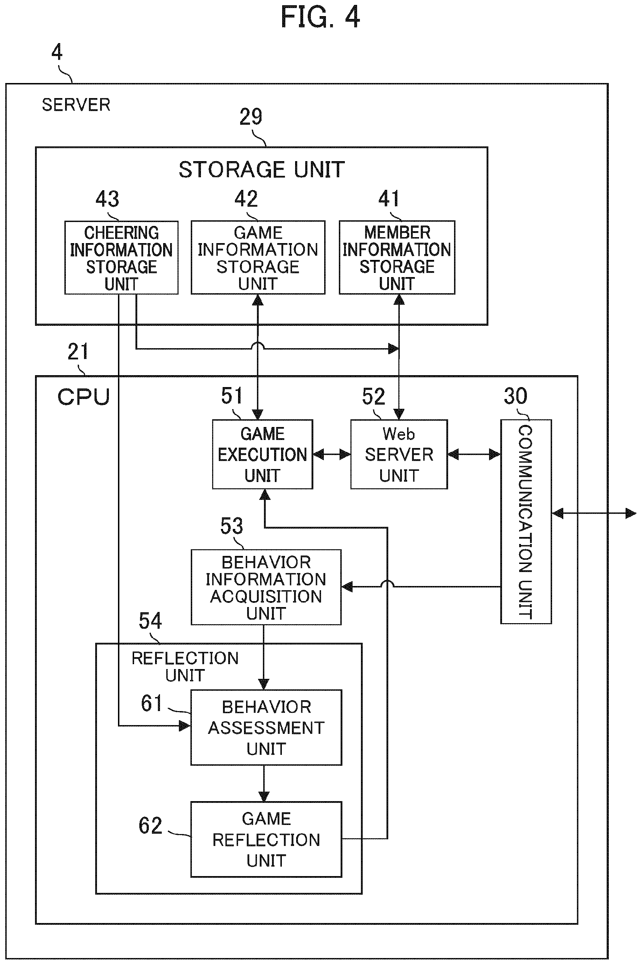

Next, a functional configuration of the information processing system of FIG. 2 will be described with reference to FIG. 4. FIG. 4 is a diagram showing a functional configuration of the server 4 of FIG. 3 included in the information processing system of FIG. 2.

As shown in FIG. 4, the storage unit 29 of the server 4 functions as a member information storage unit 41, a game information storage unit 42, a cheering information storage unit 43, and the like. The member information storage unit 41 stores member information including, for example, user IDs and passwords. A player P who is going to participate in this game conducts membership registration as a player. The player P registers a handle name and the like, and a team name and the like. In addition, a supporter U can also conduct membership registration as a supporter, and register the handle name, team name, etc. of a desired player P supported by the supporter U in advance. Note that the membership registration of the supporter U is not mandatory, and it is also possible to access a Web site and cheer by pushing a cheering button on the screen while watching the game.

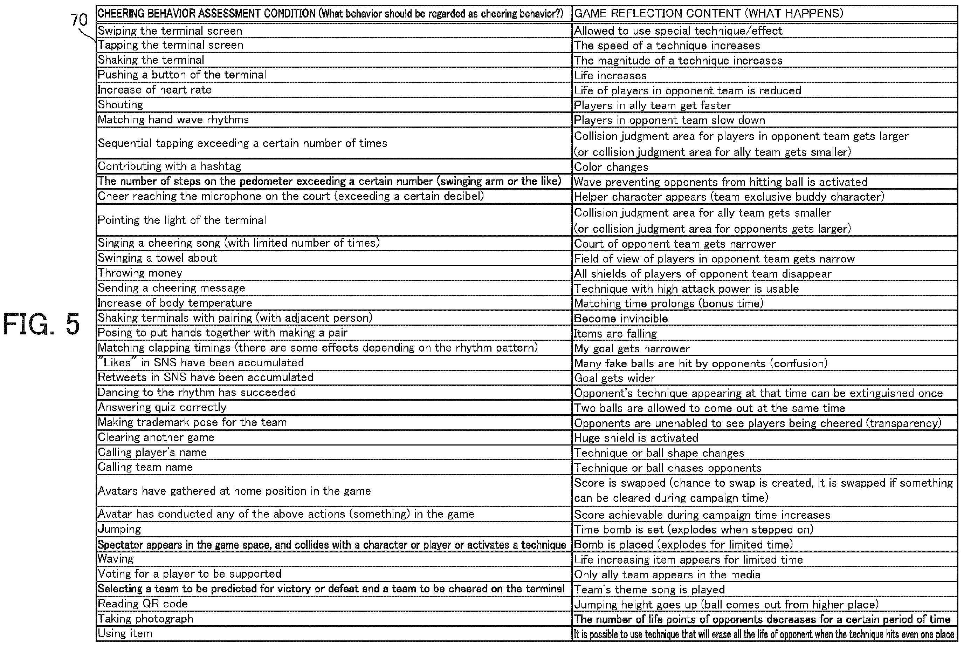

In the game information storage unit 42 are stored not only information for displaying objects on the HMD 1-1 and causing the objects to operate on the game, but also setting information such as parameters, team results, a game history, and the like. In the cheering information storage unit 43 is stored a table 70 in which a condition (cheering behavior assessment condition) for assessing that a behavior acquired from each supporter terminal 3 is a cheering behavior is associated with information (game reflection content) indicating how a cheering behavior matching the above cheering behavior assessment condition is reflected to the game as shown in FIG. 5. In other words, this table 70 associates the behavior assessment condition for assessing that a behavior included in behavior information acquired from each supporter U is an effective behavior with the game reflection content indicating how the behavior matching the above behavior assessment condition should be reflected to the game. The behavior information includes information indicating a change in the situation where the supporter terminal 3 detects the movement, voice of viewer, or an operation of the supporter U on the supporter terminal 3. The change in the situation includes changes of one or more of the button operation of the supporter U on the supporter terminal 3, the number of steps of the supporter U, the voice of the supporter U, the movement of the body of the supporter U, and the movement of the supporter U's possession. Threshold values are set for the respective behaviors in order to determine that the situation of the supporter U has changed. For example, in the case of the number of steps, the threshold value is set to some steps or more, in the case of handclap, the threshold value is set to some times or more of handclapping, in the case of voice, the threshold value is set to some dBs or more, and the like.

The CPU 21 of the server 4 functions as a game execution unit 51, a Web server unit 52, a behavior information acquisition unit 53, and a reflection unit 54. The game execution unit 51 executes a game in which an object is operated according to the movement of the player P. The game execution unit 51 displays, on HMD 1-1, a real space which the player P wearing the HMD 1-1 sees through the HMD 1-1 while objects (energy ball EB, shield SH, etc.) in an AR space are superimposed on the real space, and executes, on the HMD 1-1, an AR game in which the objects are operated according to the movement of the player P (natural user interface such as movement of the head, hand gesture, and movement of line of sight).

The Web server unit 52 makes an AR game management site open to the public on the network N, and provides services related to games to members which have conducted membership registration on the management site. Since members who have completed membership registration are given member IDs and passwords, the members can get services as members by accessing the management site by using their own information terminals (HMD 1-1, supporter terminals 3-1 to 3-n, etc.) and logging in to member pages with the member IDs and the passwords.

The behavior information acquisition unit 53 acquires behavior information pertaining to behaviors of third parties which are related to the game with the exception of the players P. The behavior information acquisition unit 53 receives and acquires behavior information pertaining to cheering behaviors performed by the supporters U watching the game from the respective supporter terminals 3-1 to 3-n through the communication unit 30. In other words, the behavior information acquisition unit 53 acquires information on the cheering behaviors of the supporters U from the supporter terminals 3 possessed by the supporters U. The reflection unit 54 generates a change which affects the game, including the objects, based on the behavior information acquired from the respective supporter terminals 3-1 to 3-n by the behavior information acquisition unit 53. The reflection unit 54 controls the game execution unit 51 so as to bring about a state change in the movements of the game, including the objects, according to a behavior which has been assessed as a cheering behavior based on the behavior information.

The reflection unit 54 includes a behavior assessment unit 61, a game reflection unit 62, and the like. The behavior assessment unit 61 assesses a behavior matching a preset condition based on the behavior information acquired from the respective supporter terminals 3-1 to 3-n by the behavior information acquisition unit 53. Specifically, when the behavior information acquisition unit 53 acquires the behavior information from the respective supporter terminals 3-1 to 3-n, the behavior assessment unit 61 refers to the table 70 of the cheering information storage unit 43 to determine whether or not the behavior included in the acquired behavior information matches a cheering behavior assessment condition preset in the table 70, and if the matching behavior is included, the behavior is assessed as a cheering behavior. When the change in the situation of the supporter U exceeds a preset threshold value, the behavior assessment unit 61 notifies it to the game reflection unit 62 to cause a change in the game, including the objects. For example, the change is some steps or more for the number of steps, some times or more of handclapping for handclap, some dBs or more for voice, and the like.

The game reflection unit 62 generates a change affecting the game, including the objects, based on a behavior assessed by the behavior assessment unit 61. In other words, when the behavior assessment unit 61 assesses the behavior as a cheering behavior, the game reflection unit 62 reads out the game reflection content corresponding to the cheering behavior from the table 70, and outputs a control signal to the game execution unit 51 so that the game operates according to the content.

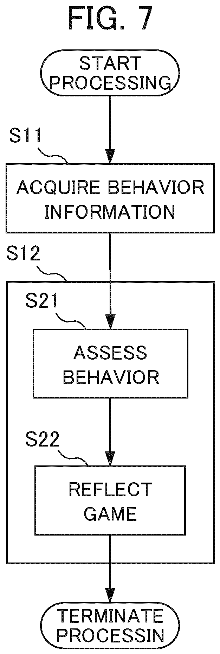

Next, the operation (the content of the service) of this information processing system will be described with reference to FIG. 7. FIG. 7 is a flowchart showing the operation of the server of FIG. 4 in the information processing system of FIG. 2.

In the case of this information processing system, the player P who participates in the game and the supporter U who is a spectator log in to the member site which is made open to the public by the server 4, and registers which team (which player) the supporter U supports. If a favorite team or player P (supported player) is registered in advance at the time of membership registration, the registration of the supported player can be omitted at the time of log-in.

After the game is started, if the supporter U conducts a behavior, for example, "gives a cheer" "jumps", "waves a flag" for a favorite team or player P when the supporter U cheers for desired teams or players P while watching the game, the supporter terminals 3-1 to 3-n detects the behavior of the supporter U as behavior information, and transmits the detected behavior information to the server 4.

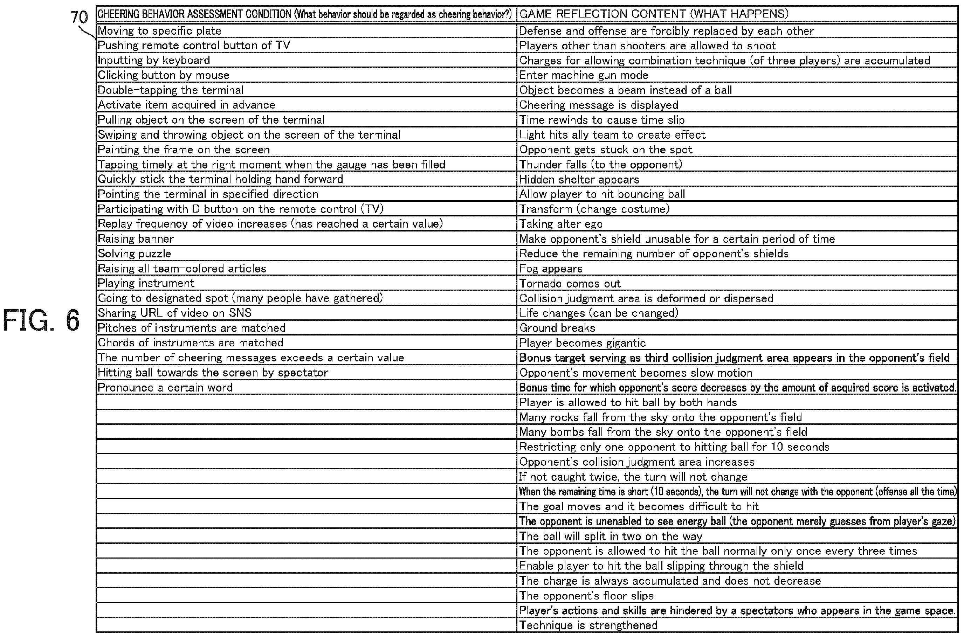

The behavior of "giving a cheer" is detected as voice data input to the microphone on the supporter terminals 3-1 to 3-n, and the voice data is transmitted as the behavior information of the supporter. The behavior of "jumping" is counted as the number of steps of the pedometer function on the supporter terminals 3-1 to 3-n, and the number of steps is transmitted as the behavior information of the supporter. The behavior of "waving a flag" is recognized as a flag waving behavior by image recognition of the camera function on the supporter terminals 3-1 to 3-n, and a command corresponding to the flag waving behavior is transmitted. If there is a margin in the capacity, communication speed, etc. of the network N, an image (video or the like) of the supporter U captured by the camera function of the supporter terminals 3-1 to 3-n may be sent to the server 4 as behavior information. In this way, the behavior of the supporter U is converted into behavior information and then transmitted. The matter illustrated here is an example, and there are various cheering behaviors other than the above behaviors. Some of the behaviors assessed as cheering behaviors are disclosed in the fields of cheering behavior assessment conditions in Table 70 of FIGS. 5 and 6.

In the server 4, the behavior information acquisition unit 53 acquires behavior information pertaining to behaviors of the supporters U who are third parties related to the game with the exception of the players P in step S11 of FIG. 7. More specifically, the behavior information acquisition unit 53 acquires, through the communication unit 30, the behavior information which the respective supporter terminals 3-1 to 3-n detect from the supporters U watching the game.

In step S12, the reflection unit 54 generates a change which affects the game, including the objects, based on the behavior information acquired by the behavior information acquisition unit 53. The processing of step S12 will be described in detail. In step S21, the behavior assessment unit 61 assesses a behavior matching a preset condition based on the behavior information acquired from the respective supporter terminals 3-1 to 3-n by the behavior information acquisition unit 53. Specifically, when the behavior information is acquired from the respective supporter terminals 3-1 to 3-n by the behavior information acquisition unit 53, the behavior assessment unit 61 refers to the table 70 of the cheering information storage unit 43 to determine whether or not a behavior included in the acquired behavior information matches a cheering behavior assessment condition preset in the table 70. If the matching behavior is included, the behavior assessment unit 61 assesses the matching behavior as a cheering behavior, reads out the game reflection content corresponding to the cheering behavior from the table 70, and notifies it to the game reflection unit 62.

Here, an example in which the cheering behavior causes a change that affects the game will be described with reference to FIG. 5. In the server 4, for example, when a supporter U pushes the button of the supporter terminal 3, behavior information indicating "the button of the terminal has been pushed" is acquired from the supporter terminal 3, so that the behavior assessment unit 61 refers to the cheering behavior assessment condition of the table 70 shown in FIG. 5 to determine whether the cheering behavior pertaining to the cheering behavior assessment condition and the acquired behavior information match each other. As a result of this determination, the behavior information of "the button of the terminal has been pushed" matches a cheering behavior assessment condition of "when the button of the terminal is pushed", so that the behavior assessment unit 61 regards the acquired behavior information as a cheering behavior, and notifies to the game reflection unit 62 so that the content of "life increases", which is the corresponding game reflection content in the same field, is reflected to the game. The above-mentioned "terminal" indicates the supporter terminal 3.

The description will be returned to the description on the processing from here. In step S22 of FIG. 7, the game reflection unit 62 generates a change that affects the game, including the objects, based on the behavior assessed in the behavior assessment unit 61. In other words, when the behavior is assessed as a cheering behavior by the behavior assessment unit 61, the game reflection content corresponding to the cheering behavior is notified to the game reflection unit 62, and the game reflection unit 62 outputs control information to the game execution unit 51 so that the game operates according to the reflection content. The game execution unit 51 which has received the control information causes the game to operate according to the content indicated by the control information.

### (Second Embodiment)

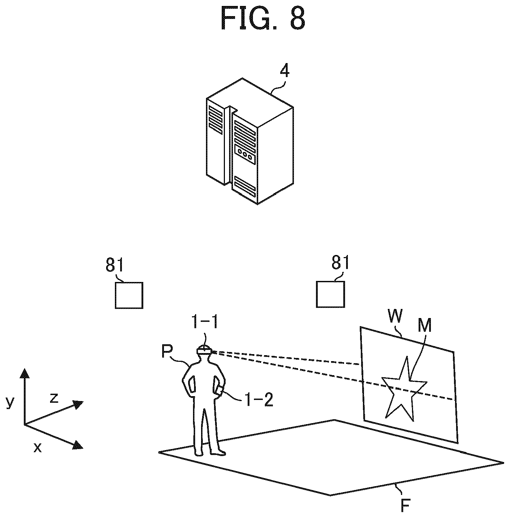

Next, an information processing system according to a second embodiment of the present invention will be described with reference to FIG. 8. The second embodiment has the hardware configuration of the server 4 of FIG. 3 included in the information processing system of FIGS. 1 and 2 described in the first embodiment, and the functional configuration of the server 4 of FIG. 4, and the duplicative description on the configurations is omitted.

As shown in FIG. 8, the information processing system of the second embodiment includes a server 4, a plurality of base stations 81, an HMD 1-1, and an arm sensor 1-2. A real player P plays a game on the floor F in a limited range. In order to match this real space with a virtual space in the game, for the sake of description, the space is represented by a coordinate system of x-axis, y-axis, and z-axis from a certain starting point. A marker M having a predetermined size is provided at a predetermined height position on a predetermined wall surface W around the floor F. Each base station 81 is a multi-axis laser beam emitter, and the base stations 81 are installed diagonally at the corners of the floor F. The base stations 81 irradiate the floor F with an infrared laser beam at regular intervals.

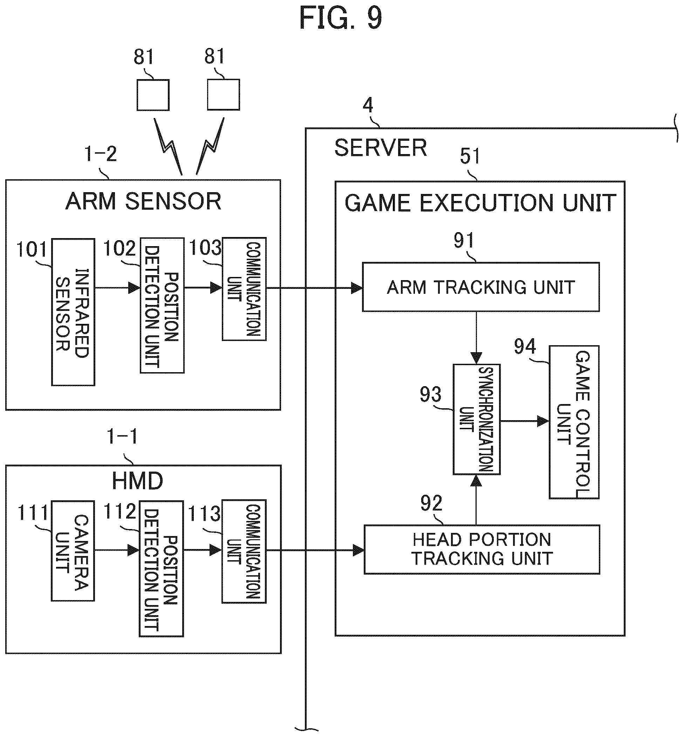

As shown in FIG. 9, the information processing system includes the HMD 1-1, the arm sensor 1-2, and a game execution unit 51 of the server 4. The HMD 1-1 includes a camera unit 111, a position detection unit 112, and a communication unit 113. The camera unit 111 is, for example, a CCD sensor or the like, and captures images in the line-of-sight direction of the player P. The images include video images or still images. The image shows a whole picture. The position detection unit 112 detects the position of the HMD 1-1, that is, the position of the head portion of the player P on which the HMD 1-1 is mounted, based on the position of the marker included in the images captured by the camera unit 111 and the displacement of the captured images through image recognition processing. As an example, an image recognition technique such as ARKit may be used. Examples of the image recognition technique include marker tracking, world tracking, and the like, and these techniques may be used. Techniques other than the foregoing techniques may be used. The communication unit 113 communicates with the server 4 and the HMD 1-1. The communication unit 112 transmits the position information of the head portion of the player P detected by the position detection unit 112 to the server 4.

The arm sensor 1-2 includes an infrared sensor 101, a position detection unit 102, and a communication unit 103. The infrared sensor 101 has a large number of light receiving sensors installed therein, and receives infrared laser beams emitted from base stations 81 at different positions. The position detection unit 102 detects the position of an arm or hand of a player P on which the arm sensor 1-2 is mounted, from the times and angles at which the infrared sensors 101 receives the infrared laser beams. Hereinafter, the arm or hand is collectively referred to as "hand". As an example, a tracking technique or the like based on HTC VIVE may be used. Those including the head, hands, and feet are called limbs. The communication unit 102 communicates with the server 4 and the arm sensor 1-2. The communication unit 112 transmits the position information of the position of the hand of the player P detected by the position detection unit 102 to the server 4.

The game execution unit 51 of the server 4 includes an arm tracking unit 91, a head portion tracking unit 92, a synchronization unit 93, and a game control unit 94. The head portion tracking unit 92 tracks the position of the head portion of the player P based on the position information of the head portion of the player P acquired from HMD 1-1. The arm tracking unit 91 tracks the position of the hand based on the position information of the hand of the player P acquired from the arm sensor 1-2.

The synchronization unit 93 synchronizes first tracking information obtained by tracking the position of the head portion by the head portion tracking unit 92 with second tracking information obtained by tracking the position of the hand by the arm tracking unit 91 to acquire the position information of the head portion and the hand at the same timing, that is, detect the positions of the head portion and the hand. The tracking information is transition information in which the position changes in time series (vector information on the distance and the direction). The game control unit 94 controls to display an image (effect) matched with the positions of the head portion and hand acquired (detected) by the synchronization unit 93 in a virtual space in the game.

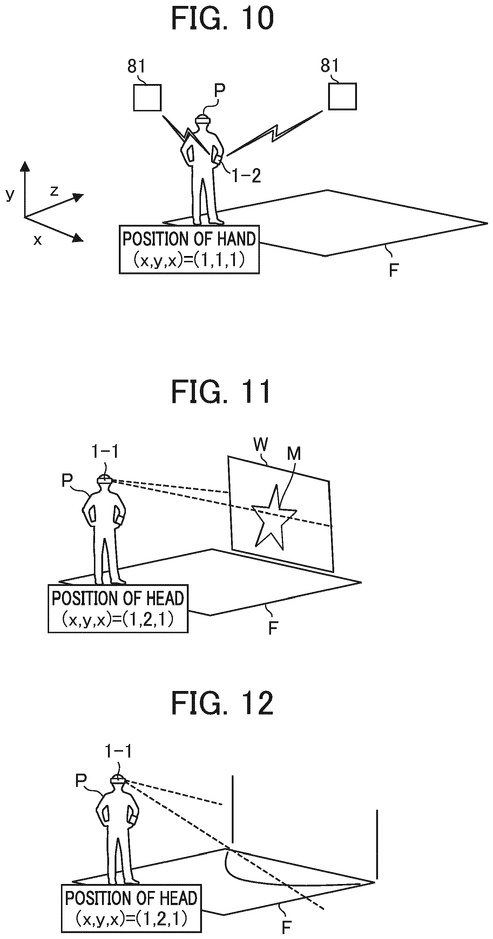

Subsequently, the operation of the information processing system of the second embodiment will be described with reference to FIGS. 10 to 15. First, an operation of tracking the position of the hand in the information processing system will be described with reference to FIG. 10.

As shown in FIG. 10, infrared laser beams are irradiated from the base stations 81 at regular intervals within the range of the floor F. When the player P enters the inside of the floor F, infrared laser beams emitted from the respective base stations 81 are received by the infrared sensor 101 of the arm sensor 1-2 mounted on the arm of the player P. The position detection unit 102 detects the position of the hand of the player P from the times and angles at which the infrared sensor 101 receives the infrared laser beams. As an example, the coordinates of the space (x, y, z)=(1,1,1) or the like are detected as the position of the hand.

Subsequently, an operation of tracking the position of the head portion in the information processing system will be described with reference to FIGS. 11 and 12. Two methods of marker tracking and world tracking are known as a tracking technique using the imaging function of HMD 1-1, and each of them will be described.

In the marker tracking, when the player P turns his/her line of sight to the marker M on the wall surface W while the player P stands within the range of the floor F as shown in FIG. 11, an image of the wall surface W captured by the camera unit 111 is input to the position detection unit 112 in the HMD 1-1. The position detection unit 112 detects the marker M from the input image of the wall surface W by image recognition processing, corrects the displacement of the marker M from the origin, and detects the correct current position of the head portion. As an example, the coordinate (x, y, z)=(1, 2, 1) or the like of the space is detected as the position of the head portion.

In the world tracking, when the player P moves his/her line of sight so as to look around while the player P stands within the range of the floor F as shown in FIG. 12, in the HMD 1-1, images which are captured by the camera unit 111 and in which the surrounding scenery changes are sequentially input to the position detection unit 112. The position detection unit 112 motion-captures a plurality of images in which the input surrounding scenery changes, and recognizes the difference among the captured images (difference in capture time and difference in image) by image recognition processing to detect the position of the correct current head portion. As an example, similarly to the marker tracking, the coordinate (x, y, z) = (1, 2, 1) of the space is detected as the position of the head portion.

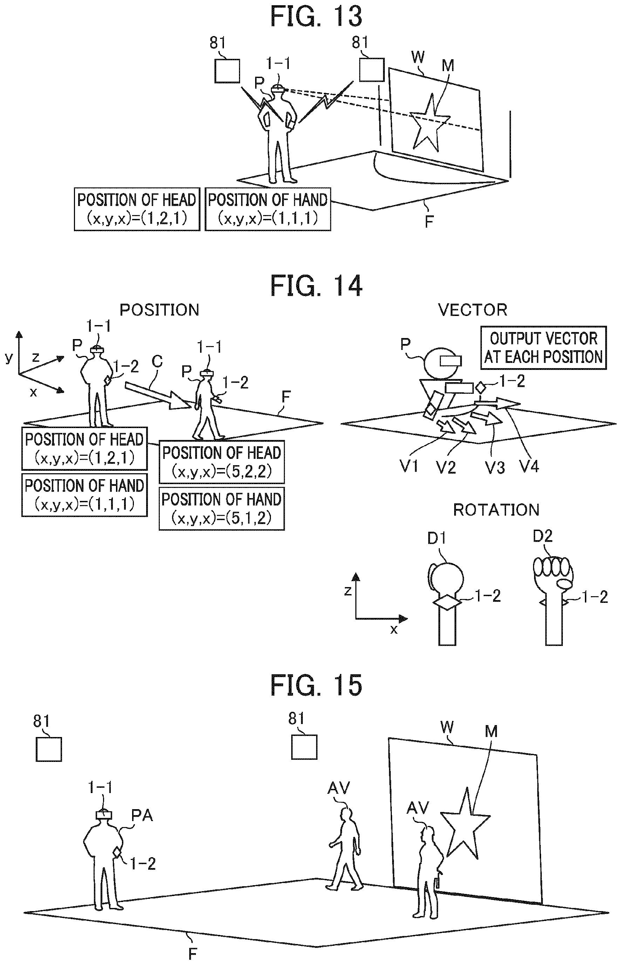

Next, a synchronization operation of two pieces of tracking information in the information processing system will be described with reference to FIG. 13. The position (coordinate) of the head portion detected by the HMD 1-1 and the position (coordinate) of the hand detected by the arm sensor 1-2 are received by the server 4, and input to the game execution unit 51. In the game execution unit 51, the arm tracking unit 91 tracks the changing position of the hand based on the positions (coordinates in the space) of the hand of the player P which are sequentially acquired from the arm sensor 1-2. In other word, the changing position of the hand is tracked. Further, the head portion tracking unit 92 tracks the changing position of the head portion based on the positions (coordinates in the space) of the head portion of the player P which are sequentially acquired from the HMD 1-1.

The synchronization unit 93 synchronizes first tracking information obtained by tracking the position of the hand by the arm tracking unit 91 (information in which the position changes in time series) with second tracking information obtained by tracking the position of the head portion by the head portion tracking unit 92 (information in which the position changes in time series) to generate tracking synchronization information including the position of the head portion ((x, y, z) = (1, 2, 1)) and the position of the hand (the coordinate (x, y, z) = (1,1,1)) at the same timing as shown in FIG. 13, and outputs the tracking synchronization information to the game control unit 94. The game control unit 94 controls to display, on the HMD 1-1 (in the three-dimensional virtual space in the game), images of objects (including an energy ball EB, an effect image, etc.) that move according to the positions of the head and hand included in the tracking synchronization information generated (output) by the synchronization unit 93.

Here, the tracking synchronization information generated by the synchronization unit 93 will be described with reference to FIG. 14. As shown in FIG. 14, the synchronization unit 93 generates and outputs tracking synchronization information including a vector (values of speed and direction at each position), rotation (rotation information), and the like in addition to the above-mentioned positions (position information). The positions are transitional displacements of the positions of the head portion and hand of the player P according to the time change. The positions are, for example, information indicating that the position of the head portion of the player P is (the coordinate of the space x, y, z) = (1, 2, 1) and the position of the hand is (the coordinate of the space x, y, z) = (1,1,1) at the tracking timing of a certain time, and then, at the next tracking timing, after the player P moves in the direction of an arrow C, the position of the head portion of the player P has changed to (the coordinate x, y, z in the space x, y, z) = (5,2,2), and the position of the hand has changed to (the coordinate in the space x, y, z) = (5,1,2). The vector includes the values of vectors V1 to V4 at respective positions which are detected every 1/30 sec, for example, when the movement of the position is detected by the arm sensor 1-2 upon swinging or rotating the arm by the player P. The values of the vectors V1 to V4 are the values of the direction and speed of an arm swinging force, the values of the direction and speed of an arm rotating force, and the like. The rotation includes a facing direction of the hand in a state of the hand (a state where the palm of the hand D2 faces the front) or the rotation direction of the hand when the player P rotates his/her wrist on an xz plane from a state of the hand (for example, a state where the back of the hand D1 faces the front).

As described above, according to the second embodiment, the game execution unit 51 of the server 4 includes the synchronization unit 93, and the tracking information pieces of the two positions of the HMD 1-1 and the arm sensor 1-2 are synchronized with each other, whereby the position of the head portion of player P and the position of the hand of the player P are synchronized with each other in time series. Therefore, it is possible to interlock the objects of the game with the movements of the head portion and hand of the player P when the player P moves, so that the player P and the supporters U can achieve realistic play sensations for the motions of the player P and the objects (appearance timings and appearance positions of an energy ball EB, a shield SH, and the like). As a result, the player P and the supporters U who are third parties other than the player P can enjoy the game.

Here, an example of application to a game using the synchronization function of the synchronization unit 93 will be described with reference to FIG. 15. When players present at different places play against each other, it is assumed that one player PA is on an actual floor F as shown in FIG. 14. The other player is not on the floor F, and thus an avatar AV corresponding to the other player is displayed on the HMD 1-1. The avatar is a humanoid object corresponding to the position, angle, and movement of the player P in a virtual space. The other player is also on a floor at a different place in the same environment as the floor F where the player PA is located, and performs tracking by the same method as described above, so that it is possible to construct a virtual reality space in which the players at different places play against each other as if they play against each other on the same floor F. Players at different places can belong to the same team and play against other teams.

### (third Embodiment)

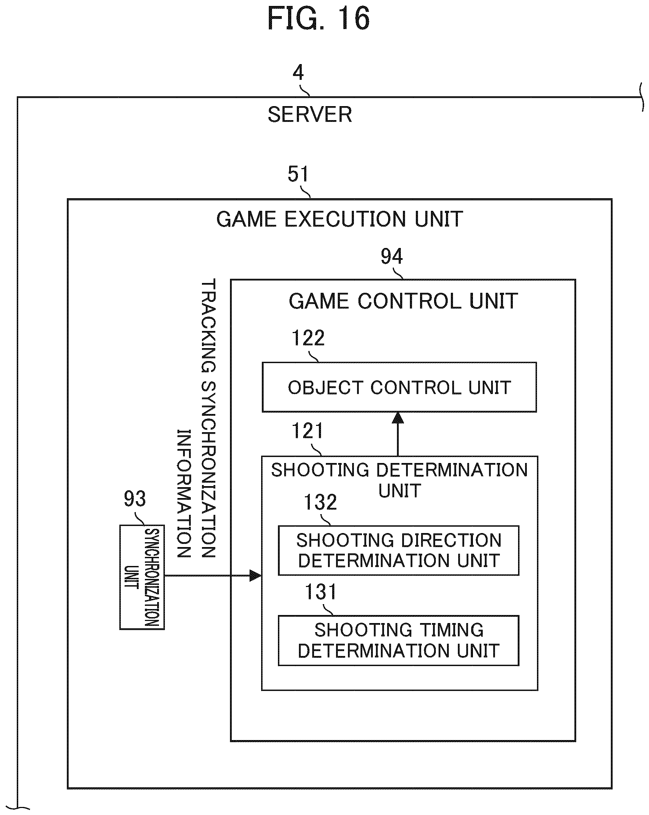

Next, an information processing system according to a third embodiment will be described with reference to FIG. 16. FIG. 16 is a diagram showing a main part (game execution unit) of a functional configuration of a server in the information processing system of the third embodiment. This third embodiment has the hardware configuration of the server 4 of FIG. 3 included in the information processing system of FIGS. 1 and 2 described in the first embodiment, the functional configuration of the server 4 of FIG. 4, and the configuration of FIG. 8 described in the second embodiment, and the duplicative description on the configurations will be omitted.

As shown in FIG. 16, the information processing system of the third embodiment includes an HMD 1-1, an arm sensor 1-2, a base station 81, and a game execution unit 51 of the server 4. The HMD 1-1, the arm sensor 1-2, and the base station 81 have the same configurations as those in the second embodiment, and the description thereon will be omitted.

The game execution unit 51 of the server 4 includes a synchronization unit 93 and a game control unit 94. The synchronization unit 93 and the game control unit 94 have the same configurations as those of the second embodiment, and the description thereon will be omitted. The game control unit 94 includes a shooting determination unit 121, and an object control unit 122. The object control unit 122 controls the operations of the objects displayed on the HMD 1-1 based on shooting information notified from the shooting determination unit 122.

The shooting determination unit 121 performs shooting determination on an object interlocked with the movement of the player P, for example, an energy ball EB or the like, based on the tracking synchronization information input from the synchronization unit 93, and notifies shooting information including a shooting direction and a shooting timing as a result of the shooting determination to the object control unit 122. More specifically, the shooting determination unit 121 controls to shoot an object (energy ball EB or the like) at such a timing and in such a direction that the object interlocks with the movement of the player P, based on the vector at each position included in the tracking synchronization information input from the synchronization unit 93.

The shooting determination unit 121 includes a shooting timing determination unit 131, and a shooting direction determination unit 132. The shooting timing determination unit 131 determines the shooting timing of an object (when the object is to be shot) based on the vector (direction and speed) at each position included in the tracking synchronization information input from the synchronization unit 93. More specifically, the shooting timing determination unit 131 determines the shooting timing of an object (when the object is to be shot) based on the speed of the vector at each position included in the sequentially input tracking synchronization information.

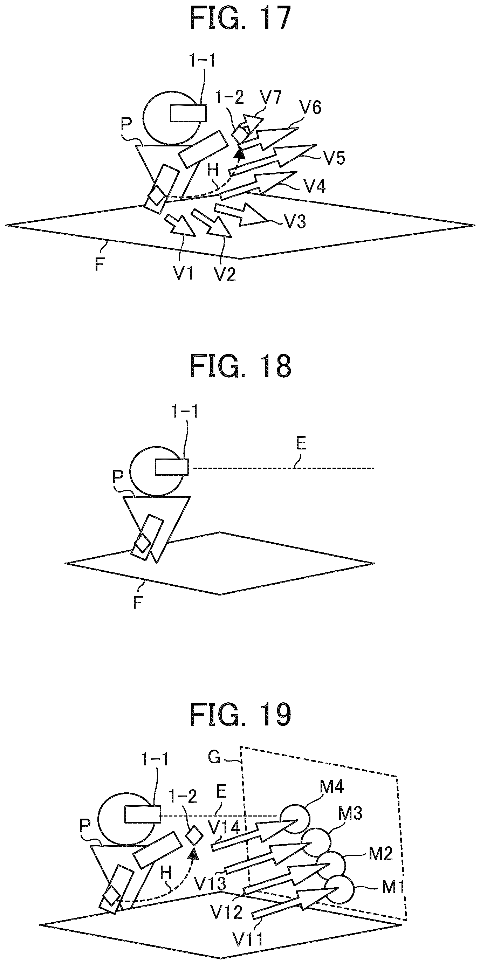

For example, when the player P swings his/her arm forward (in the direction of his/her line of sight) from bottom to top and performs a shooting operation in the direction of an arrow H as shown in FIG. 17, the change in position is detected by the arm sensor 1-2, and tracking synchronization information is sequentially input from the synchronization unit 93 to the shooting determination unit 121. Each tracking synchronization information includes a vector (direction and speed) at each position that changes according to the swing of the arm, and a plurality of vectors V1 to V7 can be obtained in time series. The shooting timing determination unit 131 starts determining the shooting timing at a timing when the value of the forward speed exceeds a preset constant value while the vectors V1 to V7 are sequentially obtained. In the example shown in FIG. 17, it is assumed that the determination is started at the timing when the vector V4 is obtained. The shooting timing determination unit 131 determines the shooting timing when the value of the speed of the vector becomes equal to or less than a certain value. In the example shown in FIG. 17, the timing at which the vector V7 is obtained is defined as the shooting timing.

The shooting direction determination unit 132 determines the shooting direction of an object (where the object is to be shot) based on the vector at each position included in the tracking synchronization information input from the synchronization unit 93. More specifically, when the player P standing on the floor F directs his/her line of sight E forward (in the direction of the line of sight) in order to shoot an object as shown in FIG. 18, the shooting direction determination unit 132 maintains the Y coordinate (height component) of the position of the HMD 1-1. In short, the line of sight of the player P is maintained. Thereafter, when the player P swings his/her arm forward (in the direction of his/her line of sight) from bottom to top and performs a shooting operation in the direction of an arrow H as shown in FIG. 19, the shooting direction determination unit 132 extracts points M1 to M4 at which the directions of sequentially acquired vectors V11 to V14 enter a certain range G on the front side. When the points M1 to M4 have reached a maintained height of the line of sight, the shooting direction determination unit 132 determines that shooting is performed in the direction of the vector. In the example of FIG. 19, it is determined that an object is shot in the direction (at the angle) of the vector V4 in the direction to the point M4 at the height of the line of sight E. In this way, the shooting determination unit 121 generates shooting information including the shooting direction and the shooting timing obtained by the shooting timing determination unit 131 and the shooting direction determination unit 132, and notifies it to the object control unit 122.

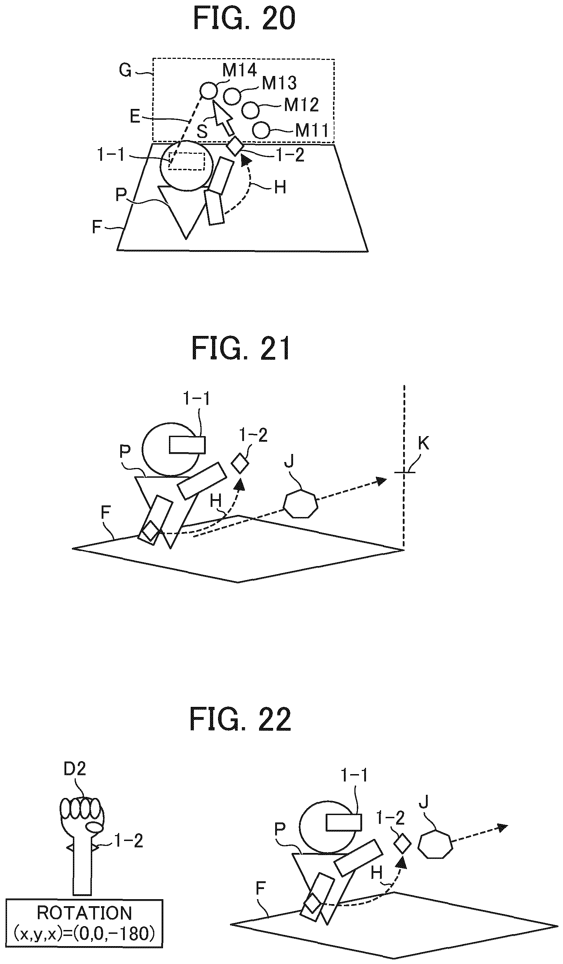

As a result, the object control unit 122 can control to shoot a shot S to a position around the height of the line of sight E as shown in FIG. 20 by using the shooting direction and the shooting timing included in the shooting information notified from the shooting determination unit 121.

As described above, according to the third embodiment, the game execution unit 51 is provided with the shooting determination unit 121 and the object control unit 122, whereby the shooting determination is performed on the object interlocking with the movement of the player P based on the tracking synchronization information input from the synchronization unit 93, and the operation of the object is controlled based on the result of the shooting determination. Therefore, in such a game that the player P throws or shoots an object by his/her hand, the object is smoothly released from the hand according to the throwing motion of the player P, so that attractiveness is enhanced, and the player P and the supporters U can enjoy the game.

Although some embodiments of the present invention have been described above, the present invention is not limited to the above-described embodiments, and modifications, improvements, and the like are included in the present invention to the extent that the object of the present invention can be achieved.

In the above embodiments, the AR game which the player P plays while wearing the HMD 1-1 has been described as an example, but the embodiments can also be applied to, for example, a VR game and an MR game. Further, the embodiments can be applied to a game, a video game, and the like in which the player P plays the games without wearing HMD 1-1 while operating a game machine or a controller. VR is an abbreviation for Virtual Reality, and MR is an abbreviation for Mixed Reality. In the VR game, the game execution unit 51 executes a game in which an avatar in a virtual reality space corresponding to a real player P moves according to the movement of the player P or the operation of the game machine, and an image in the virtual reality space changes according to the movement of the avatar. The MR games are almost common to AR games. In other words, in the MR games, the game execution unit 51 displays objects while the objects are superimposed on things in the real space that the player P can see through a transmissive type display, and operates the objects according to the movement of the player P. Further, in the above embodiment, a game in which a plurality of players P are grouped into two teams A and B to play against each other has been described as an example. However, in addition to this game, the present invention is applicable to a game in which a player P plays alone, a game in which a number of teams play against one another in the same field, etc., and is not limited to the number of players P and the content of the game. The game in the present invention has a broad meaning, and includes, for example, such a show-type video distribution that one player P or a plurality of players P distribute a video to supporter terminals 3 and the supporters U present throwing money according to the content of the video. The game also includes sports, events, and the like.

In the example of the third embodiment, an example of such a game that the player P throws an object such as an energy ball EB by his/her hand has been described. Control as described below is performed in order to support a game in which an object is shot by hand in addition to the above-mentioned game. The object control unit 122 fixes the shooting position (height) in the Y-axis direction, and performs control so that a shoot J flies to a target at a constant height K as shown in FIG. 21 no matter how the player P swings his/her arm, or no matter where the head portion of the player P is.

In addition, the arm sensor 1-2 attached to the arm may be used to control shoot and charge. In this case, for example, as shown in FIG. 22, the shooting of a shoot J may be controlled by using rotation information when the player P rotates his/her hand to turn up the palm D2, that is, when the arm sensor 1-2 is turned to the floor. Further, a state in which the arm sensor 1-2 is turned to the floor is maintained for a certain period of time, thereby completing charging for performing a next shoot J. In this case, the shoot J is allowed to be shot by swinging the arm in the direction of an arrow H as shown in FIG. 22 in a state where charging has been completed.

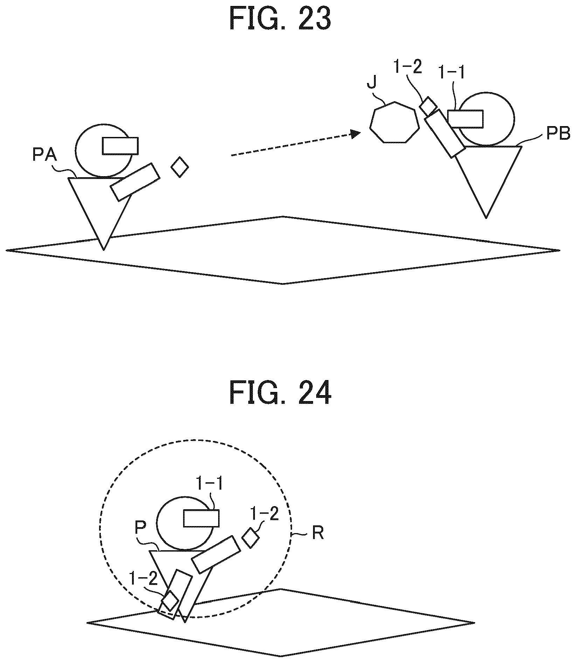

Further, as shown in FIG. 23, it is possible to control a shoot J shot by a player PA of an opposing team so that a player PB of the other team can receive the shoot J by the arm sensor 1-2 at his/her hand. In this case, for example, a condition is set so that when a model of a ball enters a range of a certain radius from the position of the arm sensor 1-2 in a three-dimensional space, the ball can be caught.

Further, in order to prevent erroneous shooting of shoots as much as possible, as shown in FIG. 24, shooting may be controlled to be forcibly prevented with respect to a predetermined range R of a sense of distance from the position of HMD 1-1 (the position of the head portion) to the position of the arm sensor 1-2 (the position of the hand).

Further, for example, the series of processing described above may be executed by hardware or may be executed by software. Further, one functional block may be configured by a single piece of hardware, a single piece of software, or a combination thereof.

When a series of processing is executed by software, a program constituting the software is installed into a computer or the like from a network or a recording medium. The computer may be a computer incorporated in dedicated hardware. Further, the computer may be a computer which is capable of executing various functions by installing various programs therein, for example, it may be a general-purpose smart phone, PC or the like in addition to a server.

A recording medium containing such a program is configured not only in the form of a removable medium (not shown) to be distributed separately from the main body of a device in order to provide the program to a user, but also in the form of a recording medium to be provided to a user in a state where the recording medium is installed in the main body of a device in advance.

In this specification, the steps for describing a program to be recorded on a recording medium include not only processing to be executed in time series along the order thereof, but also processing which is to be executed in parallel or individually without being necessarily executed in time series. Further, in the present specification, the term of the system means an overall device configured by a plurality of devices, a plurality of units, and the like.

In other words, the information processing system to which the present invention is applied, including the above-described information processing system as the embodiment of FIG. 1, can take various embodiments of various aspects having the following configurations.

In other words, an information processing device to which the present invention is applied (for example, the server 4 in FIG. 4) includes
a game execution unit (for example, the game execution unit 51 in FIG. 4) for executing a game in which an object is operated according to a movement of a player P,
an information acquisition unit (for example, the behavior information acquisition unit 53 in FIG. 4, etc.) for acquiring behavior information pertaining to a behavior of a third party (supporter U) related to the game other than the player P, and a reflection unit (for example, the reflection unit 54 in FIG. 4, etc.) for generating a change that affects the game including the object, based on the behavior information acquired by the information acquisition unit.

By providing this configuration, a cheering behavior itself to be conducted by the supporter U generates a change that affects the game including the object, so that the supporter U who is a third party other than the player P can feel as if he/she participates in the game together with the player P. The reflection unit (for example, the reflection unit 54 of FIG. 4, etc.) includes
a behavior assessment unit (for example, the behavior assessment unit 61 in FIG. 4, etc.) for assessing a behavior that matches a preset condition, based on the behavior information acquired by the information acquisition unit, and
a game reflection unit (for example, the game reflection unit 62 in FIG. 4, etc.) for generating a change that affects the game including the object, based on the behavior assessed by the behavior assessment unit.

By providing this configuration, when the behavior conducted by the supporter U matches a condition, a change that affects the game including the object.

Therefore, when the supporter U conducts an effective cheering behavior, a change is generated in the game, so that the supporter U who is a third party other than the player P can feel as if he/she participates in the game.

The game execution unit (for example, the game execution unit 51 in FIG. 4, etc.) executes
game in which an object (for example, an energy ball EB, a shield SH, or the like in FIG. 1) in an augmented reality space or a mixed reality space is displayed on the display while superimposed on a real space that the player P can see through a transmissive display (for example, HMD 1-1 in FIG. 2, etc.), and the object is operated according to the movement of the player.

By providing this configuration, in the AR game or the MR game, a supporter U who is a third party other than the player P can feel as if he/she participates in the game.

The game execution unit (for example, the game execution unit 51 in FIG. 4, etc.) executes
a game in which an avatar in a virtual reality space corresponding to a real player moves according to the movement of the player or an operation of a game machine, and an image of the virtual reality space changes according to the movement of the avatar.

By providing this configuration, in the VR game, a supporter U who is a third party other than a player P can feel as if he/she participates in the game.

The condition (for example, a table 70 in FIG. 5, etc.) associates a behavior assessment condition (a cheering behavior assessment condition in the table 70) for assessing a behavior included in behavior information acquired from each third party (supporter U) as an effective behavior with a game reflection content (a game reflection content in the table 70) indicating how a behavior matching the behavior assessment condition is reflected to the game.

By providing this configuration, the behavior of the supporter U set in the table 70 is reflected to the game, so that a supporter U who is a third party other than the player P can feel as if he/she participates in the game.

The third party (supporter U) has an operable information terminal (for example, the supporter terminal 3 in FIG. 2), the behavior information includes information indicating a change in the situation where the information terminal detects the movement and voice of the third party (supporter U), or an operation on the information terminal by the third party (supporter U), and
the game reflection unit (for example, the game reflection unit 62 in FIG. 4) generates
a change in the game including the object when the information indicating the change in the situation exceeds a preset threshold value.

By providing this configuration, only the behavior of the supporter U which is set as a cheering behavior on a management side is reflected to the game, so that the game is not hindered by other disturbing behaviors and the like.

The information indicating the change in the situation includes one or more changes of a button pushing operation by the third party (supporter U) on the information terminal (for example, the supporter terminal 3 in FIG. 2), the number of steps of the third party, the voice of the third party, the movement of the body of the third party, and the movement of a third party's possession (a towel, a fan, a TV remote controller, throwing money, a fluorescent stick, or the like). By providing this configuration, it is possible to detect various cheering behaviors of the supporter U by using the existing functions of the information terminal, and it is possible to make various reflection contents matching the cheering behaviors.

The button pushing operation includes not only an operation of pushing a hardware button, but also an operation of pushing a software button (icon, object, or the like) displayed on the screen.

Further, the pushing operation includes not only a simple pushing operation, but also an operation of tracing the screen, an operation of flipping, an operation by a plurality of fingers, and the like.

The game execution unit (for example, the game execution unit 51 in FIG. 9, etc.) includes
a first tracking unit (for example, the head portion tracking unit 92 of FIG. 9, etc.) for tracking the position of a head portion based on position information of the head portion of a player P acquired from a first sensor (for example, HMD 1-1 in FIG. 9, etc.) mounted on the head portion of the player P,
a second tracking unit (for example, the arm tracking unit 91 of FIG. 9, etc.) for tracking the position of a hand based on position information of the hand of the player P acquired from a second sensor (for example, the arm sensor 1-2 of FIG. 9, etc.) mounted on the arm of the player P,
a synchronization unit (for example, the synchronization unit 93 in FIG. 9, etc.) for synchronizing the first tracking information obtained by tracking the position of the head portion by the first tracking unit with the second tracking information obtained by tracking the position of the hand by the second arm tracking unit to acquire position information of the head portion and the hand at the same timing, and
a game control unit (for example, the game control unit 94 in FIG. 9) for controlling to display, in a virtual space of the game, an image of the object which is matched with the positions of the head portion and the hand acquired by the synchronization unit.

By providing this configuration, in a game in which an object is displayed while superimposed on an real player P, the movement of the object is synchronized with the movements of limbs including the head, hands and feet of the player P, which enhances attractiveness and enables the players P and the supporters U to enjoy the game.

The game execution unit (for example, the game execution unit 51 in FIG. 16, etc.) includes
a shooting determination unit (for example, the shooting determination unit 121 in FIG. 16, etc.) for determining shoot of an object interlocking with the movement of the player P based on the tracking synchronization information input from the synchronization unit (for example, the synchronization unit 93 in FIG. 9 or FIG. 16, etc.), and
an object control unit (for example, the object control unit 122 in FIG. 16) for controlling the operation of the object based on a result of the shooting determination made by the shooting determination unit. By providing this configuration, in a game in which a player P throws or shoots an object by hand, the object is smoothly released according to a throwing motion of the player P, which enhances attractiveness and the player P and enables the players P and the supporters U to enjoy the game.

### EXPLANATION OF REFERENCE NUMERALS

1 ... player terminal, 1-1 ... HMD, 1-2 ... arm sensor, 3, 3-1 to 3-n ... supporter terminal, 4 ... server, 21 ... CPU, 29 ... storage unit, 30 ... communication unit, 41 ... member information storage unit, 42 ... game information storage unit, 43 ... support information storage unit, 51 ... game execution unit , 52 ... Web server unit, 53 ... behavior information acquisition unit, 54 ... reflection unit, 61 ... behavior assessment unit, 62 ... game reflection unit, 93 ... synchronization unit, 94 ... game control unit, 121 ... shooting determination unit, 122 ... object control unit, 131 ... shooting timing determination unit, 132 ... shooting direction determination unit

## Claims

1. An information processing device, comprising:
a game execution unit for executing a game in which an object is operated according to a movement of a player;
an information acquisition unit for acquiring behavior information on a behavior of a third party who is related to the game except for the player; and
a reflection unit for generating a change that affects the game including the object, based on the behavior information of the third party acquired by the information acquisition unit.

2. The information processing device according to claim 1, wherein the reflection unit comprises:
a behavior assessment unit for assessing a behavior matching a preset condition based on the behavior information of the third party acquired by the information acquisition unit; and
a game reflection unit for generating a change that affects the game including the object, based on the behavior assessed by the behavior assessment unit.

3. The information processing device according to claim 1 or 2, wherein the game execution unit executes
a game in which an object in an augmented reality space or a mixed reality space is superimposed on a real space that the player can see through a transmissive display and displayed on the display, and the object is operated according to the movement of the player.

4. The information processing device according to claim 1 or 2, wherein the game execution unit executes
a game in which an avatar in a virtual reality space corresponding to a real player moves according to a movement of the player or an operation of a game machine, and an image of the virtual reality space changes according to the movement of the avatar.

5. The information processing device according to any one of claims 2 to 4, wherein the condition associates
a behavior assessment condition for assessing a behavior included in behavior information acquired from the third party as an effective behavior with a game reflection content indicating how a behavior matching the behavior assessment condition
is reflected to the game.

6. The information processing device according to any one of claims 1 to 5, wherein the third party has an operable information terminal,
the behavior information includes
information indicating a change in a situation where the information terminal detects movement and voice of the third party, or an operation on the information terminal by the third party, and
the reflection unit generates
a change in the game including the object when the information indicating the change in the situation exceeds a preset threshold value.

7. The information processing device according to claim 6, wherein the information indicating the change includes
one or more changes of a button pushing operation by the third party on the information terminal, a number of steps of the third party, voice of the third party, movement of a body of the third party, and movements of a third party's possession.

8. An information processing method comprising:
a step of executing a game in which an object is operated according to movement of a player;
a step of acquiring behavior information on a behavior of a third party related to the game except for the player; and
a step of generating a change affecting the game including the object based on the acquired behavior information of the third party.

9. A program for causing an information processing device to execute processing,
the program causing the information processing device to function as:
a game execution unit for executing a game in which an object is operated according to movement of a player;
an information acquisition unit for acquiring behavior information on a behavior of a third party related to the game except for the player; and
a reflection unit for generating a change that affects the game including the object, based on the behavior information of the third party acquired by the information acquisition unit.
